# EUROPEAN PATENT SPECIFICATION

(11) **EP 3 844 202 B1**
(45) Date of publication and mention of the grant of the patent: **19.06.2024**
(21) Application number: 19748610.3
(22) Date of filing: 10.06.2019
(51) Int. Cl.: C08G 59/00

(54) **EPOXY COMPOSITE FORMULATION**
EPOXIDVERBUNDSTOFFFORMULIERUNG
FORMULATION COMPOSITE À BASE D'ÉPOXYDE

(30) Priority: 31.08.2018 US 201862725393 P
(43) Date of publication of application: 07.07.2021
(73) Proprietor: Dow Global Technologies, LLC, Midland, MI 48674 (US)
(72) Inventor: CHAUDHARY, Amit K., Midland, MI 48674 (US); REESE, Jason A., Midland, MI 48674 (US); BALIJEPALLI, Bharati, Midland, MI 48674 (US)
(74) Representative: Beck Greener LLP
(86) International application number: PCT/US2019/036236
(87) International publication number: WO 2020/046437

(56) References cited:
- WO-A1-2011/005420
- US-A1- 2013 037 840
- US-A1- 2017 283 570

## Description

### FIELD

The present invention relates to an epoxy composite formulation and a composite made from such formulation suitable for use in automotive applications.

### BACKGROUND

Carbon fiber epoxy composites can be used for many applications including automotive parts. For automotive applications there is a need to create a carbon fiber epoxy composite with continuous aligned or chopped random fibers that can: (1) be compression molded and cured in less than 5 minutes (min), (2) retain a high glass transition temperature (Tg), and (3) achieve high strengths and stiffness properties. However, the known epoxy composite formulations tend to adhere to steel and aluminum mold surfaces. An external mold release agent has been used before to aid in the release of the cured composite from a mold. However, use of external mold release agents tend to: slow down production time, lead to inconsistent application between parts, and not be effective when the composite formulation flows to fill the mold. Therefore, there exists a need for an internal mold release (IMR) agent for epoxy composite formulations such that the aforementioned problems of using an external mold release agent can be avoided.

There are a number of IMRs that are commercially available. For polyester type of composites, the most commonly used IMR is zinc stearate. For epoxy composites, there are a number of proprietary compositions that are marketed for use in epoxy systems with different product recommendations based on the curing chemistry and the molding conditions involved. Internal mold release materials available from Axel Plastics Laboratories can be found at "http://axelplastics.com/node/26". However, the known recommended solutions using an IMR do not work for a dicyandiamide-cured epoxy resin system at certain desired process conditions.

US 2017/283570 A1 discloses resin formulations comprising an epoxy resin compound, a curing agent, and a curing accelerator.

U.S. Patent No. 5,906,784 discloses curable epoxy resins; and discloses the use of a wax with a dropping point between 80 degrees Celsius (°C) and 90 °C. The wax is used as an IMR agent in an epoxy formulation that is cured with a polycarboxylic acid or anhydride. In the teachings of the above patent, the wax is described as montan ester. Licowax KSL, available from Clariant, fits all of the montan wax properties listed in the above patent. However, when Licowax KSL is used in a dicyandiamide-cured epoxy system, the cured parts cured do not release from the mold. Furthermore, the above patent teaches curing for 10 min at 160 °C followed by post cure of 2 hours (hr) at 135 °C. This curing time is not very efficient.

U.S. Patent No. 5,919,843 discloses epoxy resin molding compounds having halogen free flame retardation. The above patent discloses the use of montan wax as one of a number of possible IMR agents for a phenolically-curable epoxy resin molding compound for encapsulating electronic components. The above patent does not specify the type of montan ester that should be used. However, most montan esters do not work in epoxy resin systems, in particular, dicyandiamide-cured epoxy composite formulation systems.

Therefore, in view of the continuing need to find a solution to the above problems of the prior art related to the use of IMR agents, it would be desirable to provide a beneficial epoxy composite formulation, for example, that: (1) includes an IMR agent that can be readily incorporated into the epoxy formulation and therefore does not require an extra application step during molding; (2) produces a molded composite that can readily release from a mold during molding at high temperatures (e.g., greater than (>) 145 °C); (3) produces a molded composite in cure cycle times of less than 5 min; (4) provides an epoxy resin composite formulation that can be cured with a dicyandiamide (abbreviated herein as "dicy") curing agent; and (5) cures to form a composite part that, upon inclusion of the IMR agent, does not lower the Tg of the cured part by more than 10 percent (%). An epoxy composite formulation meeting the above requirements is highly desirable.

### SUMMARY

The present invention is directed to an epoxy composite formulation that meets all of the above material and process requirements to produce an epoxy-carbon fiber composite. Advantageously, the epoxy composite formulation of the present invention achieves good release performance in, for example, a dicy-cured epoxy resin system when cured at temperatures of greater than 145 °C; and the present invention epoxy composite formulation achieves full cured properties in less than 5 min.

In one embodiment, the present invention is directed to a curable epoxy composite formulation or composition that includes: (a) at least one epoxy resin compound, (b) at least one curing agent for the curing of the epoxy reaction, (c) at least one accelerator for the curing of the epoxy reaction, (d) at least one internal mold release agent; and (e) at least one reaction inhibitor. The curable epoxy composite composition can be cured to provide a cured molded composite article that can be readily released from a molding tool.

In another embodiment, the present invention is directed to a curable epoxy-based resin composite composition including (A) the above-described curable epoxy composite composition; and (B) at least one structural material. In a preferred embodiment, the curable epoxy-based resin composite composition can be a dicy-curable epoxy resin composite composition; and the at least one structural material can be fibers.

In yet other embodiments, the present invention includes processes of manufacturing the above epoxy resin composite composition and the composite.

### BRIEF DESCRIPTION OF THE DRAWINGS

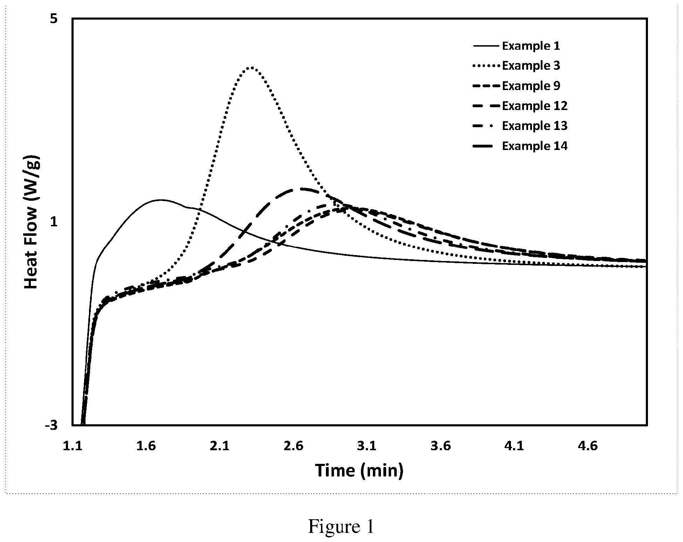

Figure 1 is a graphical illustration showing a plot of heat flow versus time for various composite resin formulations.

### DETAILED DESCRIPTION

In one broad embodiment, the novel epoxy composite composition or formulation of the present invention includes (a) at least one epoxy resin compound, (b) at least one curing agent for curing of the epoxy reaction, (c) at least one accelerator for curing of the epoxy reaction, (d) at least one internal mold release agent; and (e) at least one reaction inhibitor. The above epoxy composite composition of the present invention can be used to form a molded composite article with structural materials such as fiber materials.

The curable resin composition of the present invention contains at least one epoxy resin. The epoxy resin or mixture (if two or more different resins are present) is generally the predominant component of the curable resin composition. The epoxy resin useful for preparing the composite composition may include liquid epoxy resins, epoxy novolac resins, solid epoxy resins and mixtures thereof. In one preferred embodiment, the epoxy resin or mixture thereof by itself may be a non-tacky solid at 23 °C. In another preferred embodiment, the epoxy resin or mixture thereof by itself may be heat-softened when brought to a temperature of from 40 °C to 80 °C and from 40 °C to 65 °C in another embodiment. In still another embodiment, the epoxy resin may include at least one epoxy resin that is solid at 23 °C; and in yet another embodiment, the epoxy resin composition may contain a mixture of one or more epoxy resins that are solid at 23 °C and one or more epoxy resins that are liquid at 23 °C.

The epoxy resin or mixture thereof may have an epoxy equivalent weight (EEW) of, for example, at least 210 grams/equivalent (g/eq) or at least 220 g/eq; and up to 1,000 g/eq in one embodiment, up to 500 g/eq in another embodiment, up to 350 g/eq in still another embodiment, or up to 300 g/eq in yet another embodiment.

The epoxy resin or mixture thereof may have a number average epoxy functionality of, for example, at least 2.4 epoxy groups per molecule in one embodiment, at least 2.5 epoxy groups per molecule in another embodiment or at least 2.6 epoxy groups per molecule in still another embodiment. In addition, the number average epoxy functionality may be, for example, up to 6 epoxy groups per molecule in one embodiment, up to 4 epoxy groups per molecule in another embodiment, up to 3.5 epoxy groups per molecule in still another embodiment or up to 3.0 epoxy groups per molecule in yet another embodiment.

A wide range of epoxy resins may be suitable for the epoxy resin contained in the epoxy resin composite composition. In one preferred embodiment, the epoxy resin useful in the present invention may contain at least one polyglycidyl ether of a polyphenol. The polyglycidyl ethers of a polyphenol may include, for example: (i) diglycidyl ethers of polyhydric phenol compounds such as resorcinol, catechol, hydroquinone, biphenol, bisphenol A, bisphenol AP (1,1-bis(4-hydroxylphenyl)-1-phenyl ethane), bisphenol F, bisphenol K, bisphenol M, and tetramethylbiphenol; (ii) diglycidyl ethers of aliphatic glycols and polyether glycols such as the diglycidyl ethers of C2-24 alkylene glycols and poly(ethylene oxide) or poly(propylene oxide) glycols; (iii) polyglycidyl ethers of phenol-formaldehyde novolac resins (epoxy novolac resins), alkyl substituted phenol-formaldehyde resins such as epoxy cresol novolac resins, phenolhydroxybenzaldehyde resins and cresol-hydroxybenzaldehyde resins, in each case having three or more epoxy groups per molecule; (iv) oxazolidone group-containing polyglycidyl ethers of phenolic compounds such as are described for example in U. S. Patent No. 5,112,932. Such epoxy resins include reaction products of a diisocyanate such as diphenylmethane diisocyanate or toluene diisocyanate with a diglycidyl ether of a diphenol such as resorcinol, catechol, hydroquinone, biphenol, bisphenol A, bisphenol AP (1,1-bis(4-hydroxylphenyl)-1-phenyl ethane), bisphenol F, bisphenol K and tetramethylbiphenol. These epoxy resins may have epoxy functionalities of, for example, from 1.9 to 2.5 in one embodiment, and from 1.9 to 2.2 in another embodiment; and epoxy equivalent weights of, for example, from 300 to 500 in one embodiment, and from 325 to 450 in another embodiment; (v) dicyclopentadiene-phenol resins and dicyclopentadiene-substituted phenol resins, (vi) partially advanced epoxy resins of any of types (i), (ii) or (iii) described above; and (vii) any combination of two or more of the above epoxy resins.

Many of the above-mentioned epoxy resins of types (i) - (vi) are commercially available. And, some of the commercial epoxy resin products can often be a blend of two or more of the above-described epoxy resins. For example, commercially available polyglycidyl ethers of bisphenol A and bisphenol F that can be useful in the present invention include those sold by Olin Corporation under the designations D.E.R.^{®} 330, D.E.R.^{®} 331, D.E.R.^{®} 332, D.E.R.^{®} 354, D.E.R.^{®} 383, D.E.R. 661 and D.E.R.^{®} 662 resins. Generally, such epoxy resins have epoxy functionalities of greater than 2.

Commercially available diglycidyl ethers of polyglycol can include D.E.R.^{®} 732 and D.E.R.^{®} 736 available from Olin Corporation.

In other embodiments, commercially available epoxy novolac resins that can be useful in the present invention may include, for example, D.E.N.^{®} 354, D.E.N.^{®} 431, D.E.N.^{®} 438 and D.E.N.^{®} 439 available from Olin Corporation. In general, these epoxy novolac resin products may have epoxy equivalent weights of, for example, from 150 to 200 in one embodiment; and may have epoxy functionalities of, for example, from 2.2 to 5.0 in one embodiment and from 2.6 to 4.0 in another embodiment.

Other embodiments that can be useful in the present invention may include commercially available epoxy cresol novolac resins such as Huntsman Araldite ECN 1273; Epon^{®} 164 and Epon^{®} 165 from Hexion; and Epiclon N-660, Epiclon N-664, Epiclon N-670, Epiclon N-673, Epiclon N-680, Epiclon N-690, and Epiclon N-695 from DIC Americas. Generally, these epoxy cresol novolac resin products may have epoxy equivalent weights of, for example, from 180 to 250 in one embodiment; and may have epoxy functionalities of, for example, from 2.2 to 5.0 in one embodiment and from 2.6 to 4.8 in another embodiment.

A suitable commercially available epoxy resin that contains oxazolidone groups and that can be useful in the present invention may include D.E.R. 6508 (available from Olin Corporation).

In one embodiment of the present invention, the epoxy resin useful in the epoxy resin composition of the present invention may comprise a liquid epoxy resin in combination with an epoxy novolac resin. For example, the epoxy resin composition may contain a liquid epoxy resin that is a diglycidyl ether of bisphenol A and an epoxy novolac resin that is a polyglycidyl ether of a phenol-formaldehyde novolac. In one embodiment, the diglycidyl ethers of bisphenol A epoxy resin can be present in the composition in an amount of from 0 weight percent (wt %) to 65 wt % and the epoxy novolac resin can be present in the composition in an amount of from 0 wt % to 70 wt %, based on the total weight of all epoxy resins in the epoxy resin composition. In one preferred embodiment, the diglycidyl ether resin can be present in the composition in an amount of from 10 wt % to 40 wt % and the epoxy novolac resin can be present in the composition in an amount of from 15 wt % to 62 wt %, based on the total weight of all epoxy resins in the epoxy resin composition. In another preferred embodiment, the diglycidyl ether liquid epoxy resin can be present in the composition in an amount of from 15 wt % to 30 wt % and the epoxy novolac resin can be present in the composition in an amount of from 25 wt % to 46 wt %, based on the total weight of all epoxy resins in the epoxy resin composition.

In another embodiment, when the epoxy component in the composition is only a liquid epoxy resin, the amount of the liquid epoxy resin present in the epoxy resin composition may range from 35 wt % to 90 wt % in one embodiment, from 45 wt % to 85 wt % in another embodiment, and from 55 wt % to 75 wt % in still another embodiment, based on the total weight of the components in the epoxy resin composition.

In still another embodiment, when the epoxy component in the composition is only a solid epoxy resin, the amount of the solid epoxy resin useful in the epoxy composite composition may range from 10 wt % to 65 wt %; from 15 wt % to 55 wt % in another embodiment; and from 20 wt % to 45 wt % in even still another embodiment, based on the total weight of all epoxy resins in the epoxy resin composition. In one preferred embodiment, the amount of the solid epoxy resin in the epoxy resin composition can be from 25 wt % to 43 wt %, based on the total weight of the components in the epoxy resin composition.

In yet another embodiment, when the epoxy component in the curable resin composition contains a mixture of any of the above-mentioned types of epoxy resins (a) - (f), such epoxy resins together may constitute at least 50 wt %, at least 75 wt %, at least 90 wt %, or at least 95 wt % of the total weight of all epoxy resins present in the curable resin composition. Alternatively, the combination of epoxy resins used in the composition may constitute 100 % of the total weight of all epoxy resins.

In even still another embodiment, the curable resin composition may include a combination of (1) at least one diglycidyl ether of a bisphenol product, (2) at least one epoxy novolac resin product, and (3) at least one oxazolidone-containing epoxy resin product, these three products together constituting 90 wt % to 100 wt % or 95 wt % to 100 wt % of the total weight of all epoxy resins present in the curable resin composition.

In some embodiments, other epoxy resins may be present in the composition, but in such embodiments the other epoxy resins are present in minor quantities, if present at all. Among these other epoxy resins are cycloaliphatic epoxides including those described in U.S. Patent No. 3,686,359. These cycloaliphatic epoxides can include, for example, (3,4-epoxycyclohexylmethyl)-3,4-epoxy-cyclohexane carboxylate, bis-(3,4-epoxycyclohexyl) adipate, vinylcyclohexene monoxide, and mixtures thereof.

In other embodiments, the epoxy resins that can be used in the composition are not necessarily rubber-modified and do not necessarily contain polyether groups. However, rubber modification and modification with epoxy-terminated polyethers and/or tougheners containing a polyether that has capped terminal isocyanate groups is within the scope of the present invention.

The curable resin composition includes at least one curing agent for curing the epoxy resin. In one preferred embodiment, the curing agent is a latent type having an activation temperature of at least 100 °C and at least 120 °C in another embodiment. The curing agent is latent because the curing agent causes the epoxy resin to cure (cross-link) when heated to a temperature of at least 100 °C or greater, but does not cause the resin to cure (or the resin cures very slowly) at room temperature (about 22 °C.) or even at temperatures of up to at least 50 °C. The curing agent may be latent, for example, due to having blocked reactive groups, encapsulation, by virtue of having an elevated melting temperature (e.g., greater than 200 °C), and/or by virtue of having limited solubility in the epoxy resin (or mixture) until exposed to an elevated temperature (e.g., greater than 150 °C).

The activation temperature of a curing agent can be evaluated by combining the curing agent and a diglycidyl ether of bisphenol A having an epoxy equivalent weight of from 182 to 192 at a stoichiometric ratio, applying the combination between two substrates, heating at various temperatures for 2 hr, and then in each case measuring the lap shear strength according to DIN ISO 1465. Another sample can be cured 30 min at 180 °C, which conditions represent "full cure" conditions. The "activation temperature" refers to the lowest curing temperature at which the combination achieves at least 30 % of the lap shear strength obtained under the "full cure" conditions.

Suitable latent curing agents useful in the composition of the present invention can include, for example, boron trichloride/amine and boron trifluoride/amine complexes; melamine; diallylmelamine; aminotriazoles such as 3-amino-1,2,4-triazole; dicyandiamide; guanamines such as methyl guanidine, dimethyl guanidine, trimethyl guanidine, tetramethyl guanidine, methylisobiguanidine, dimethylisobiguanidine, tetramethylisbiguandidine, heptamethylisobiguanidine, hexamethylisobiguanidine, acetoguanamine, and benzoguanamine; and mixtures thereof. Other examples of suitable latent curing agents that may be used in embodiments of the present invention can include hydrazides such as adipic dihydrazide, stearic dihydrazide, isophthalic dihydrazide, and terephthalic dihydrazides; semicarbazide; cyanoacetamide; aromatic polyamines such as diaminodiphenylsulphones; and mixtures thereof. In one embodiment, for example, a mixture of a guanamine and a dihydrazide may be used. The use of dicyandiamide, isophthalic acid dihydrazide, adipic acid dihydrazide and 4,4'-diaminodiphenylsulphone can be used in one preferred embodiment. In still another preferred embodiment, the curing agent can be dicyandiamide. A suitable dicyandiamide latent curing agent that may be used in embodiments of the present invention is available from AC Catalysts Inc. under the product name Technicure Nanodicy.

In a preferred embodiment the curing agent is a micronized latent curing agent such as dicyandiamide. Typically, the micronized latent curing agent has a particle distribution in which 98 % of the particles have a maximum particle diameter that is less than 10 microns (µ) and where at least 35 % of particles have a particle diameter that is less than 2 µ provides for a faster cure rate of the epoxy resin composition. Fast cure rates are particularly desirable in automated applications where high throughput in the production of molded articles and parts is required.

In one preferred embodiment, the latent curing agent has a particle size distribution in which 98 % of the particles have a maximum particle diameter that is less than 6 µ; and in another embodiment, 98 % of the particles have a maximum particle diameter that is less than 4 µ. In still another embodiment, at least 45 % of the particles have a diameter of less than 2 µ, and in yet another embodiment at least 55 % of the particles have a diameter of less than 2 µ, and even still another embodiment at least 90 % of the particles have a diameter of less than 2 µ. In a preferred embodiment, 100 % of the particles have a diameter of less than 2 µ. The particle size can be measured with a laser diffraction system, such as the Beckman Colter LS 13-320 Laser Diffraction Particle Size Analyzer equipped with the Tornado Dry Powder System.

The latent curing agent in the epoxy resin composition is present in an amount that is sufficient to cure the epoxy resin. In one general embodiment, the latent curing agent may be present in the composition in an amount sufficient to provide at least 0.75 epoxy-reactive groups per epoxide group provided by the epoxy resin (or mixture thereof). In another embodiment, the amount may be at least 0.85 epoxy-reactive groups per epoxide group, at least 0.90 epoxy-reactive groups per epoxide group in still another embodiment, or at least 0.95 epoxy-reactive groups per epoxide group in yet another embodiment. In other embodiments, the curing agent can provide up to 1.5 epoxy-reactive groups per epoxy group, up to 1.25 epoxy-reactive groups per epoxy group, up to 1.15 epoxy-reactive groups per epoxy group, up to 1.10 epoxy-reactive groups per epoxy group, up to 1.05 epoxy-reactive groups per epoxy group, or up to 1.02 epoxy-reactive groups per epoxy group.

In one embodiment, the latent curing agent is present in an amount relative to the total amount of epoxy resins in the composition. The amount of latent curing agent in the epoxy resin composition is typically between 5 wt % and 15 wt % and more typically from about 6 wt % to 12 wt %, based on the total weight of the epoxy resin composition. In a preferred embodiment, the amount of latent curing agent in the epoxy resin composition can be between 7 wt % and 8 wt %, based on the total weight of the epoxy resin composition.

The curable resin composition includes at least one accelerator for the reaction of the epoxy resin in the presence of a curing agent (such as dicy). The accelerator (or curing catalyst) can also be an encapsulated (or blocked) or otherwise a latent type accelerator that becomes active only upon exposure to elevated temperatures (e.g. greater than 100 °C). The latency of the catalyst can come directly from the chemical structure of the catalyst. For example, the actual catalytically active species of a blocked latent catalyst is generally not present until generated by an unblocking reaction that occurs at the aforementioned elevated temperatures which are typically used during the molding process. The accelerator additive or latent catalyst can also be soluble in the epoxy resins of the curable composite composition so that when solubilized, the solubilized catalyst can be latent until heated to the aforementioned elevated temperatures.

As used herein, the term 'soluble" with respect to the latent catalyst requires that the catalyst be substantially dissolved in the epoxy resin composition prior to infusion of the epoxy resin composition into a structural material such a fibrous material described herein below. "Substantially dissolved" in one embodiment herein means that greater than 90 % of the catalyst is dissolved in the epoxy resin composition, greater than 95 % of the catalyst is dissolved in the epoxy resin composition in another embodiment, and 100 % of the catalyst in still another embodiment is dissolved in the epoxy resin composition. Typically, it is desirable to dissolve the catalyst in the epoxy resin composition during mixing of the epoxy resin composition.

Examples of accelerators that may be used in embodiments of the present invention can include ureas, substituted ureas, modified imidazoles, and mixtures thereof. For example, the ureas useful in the present invention composition can include toluene bis-dimethylurea; p-chlorophenyl-N,N-dimethylurea; 3-phenyl-1,1-dimethylurea; 3,4-dichlorophenyl-N,N-dimethylurea; N-(3-chloro-4-methylphenyl)-N',N'-dimethylurea; various aliphatic urea compounds such as the urea compounds described in EP 1 916 272; and mixtures thereof. Other suitable latent catalysts useful in the present invention can include, for example, tert-acryl- or alkylene amines such as benzyldimethylamine; 2,4,6-tris(dimethylaminomethyl)- phenol; piperidine or derivatives thereof; 2,4-diamino-6-[2'-methylimidazolyl-(1')]-ethyl-s-triazine, 2,4-diamino-6-[2'-methylimidazolyl-(1')]-ethyl-s-triazine isocyanuric acid adduct dehydrate; C₁-C₁₂ alkylene imidazole or N-arylimidazoles, such as 2-phenyl-imidazole, 2-methylimidazole, 1-methylimidazole, 2-ethyl-4-methylimidazole, 4,4'-methylene-bis(2- ethyl-5-methylimidazole) 2-ethyl-2-methylimidazol, or N-butylimidazol and 6-caprolactam; 2,4,6-tris(dimethylaminomethyl)phenol integrated into a poly(p-vinylphenol) matrix (as described in European patent EP 0 197 892); or 2,4,6-tris(dimethylaminomethyl)phenol integrated into a novolac resin, including those resins described in U.S. Patent No. 4,701,378; and mixtures thereof.

In one preferred embodiment, the soluble latent catalyst useful in the present invention can be blocked urea catalysts described above which are latent and which are soluble in the epoxy resin. An example of a suitable latent urea catalyst that may be used in embodiments of the epoxy resin composite composition of the present invention can be toluene bis-dimethyl urea ("TBDMU").

The latent catalyst used in the epoxy resin composition should be present in the epoxy resin composition in a catalytically effective amount. Such suitable catalytically effective amount may be, for example, from 0.1 parts by weight catalyst per 100 parts by weight of the epoxy resin(s) (PHR) to 10 PHR in one general embodiment, 0.25 PHR to 5 PHR in another embodiment, and 1 PHR to 5 PHR in still another embodiment.

The curable resin composition also includes at least one internal mold release (IMR) agent as component (d). An IMR agent is a substance contained within the curable resin composition that reduces adhesion of the cured composition to a mold or other surface against which the curable resin composition has cured. Examples of IMR agents include fatty acids having 16 or more carbon atoms in one embodiment and 18 carbon atoms to 36 carbon atoms in another embodiment. Also useful in the present invention can be IMR agents such as alkali metal or ammonium salts, monoalkyl esters, monoalkylamides and di- and/or tri- glycerides of such fatty acids; and mixtures thereof. A useful type of internal mold release includes a mixture of a fatty acid having 18 carbon atoms to 36 carbon atoms and a di- and/or tri-glyceride of a fatty acid having 10 to 36 carbon atoms. In one preferred embodiment, the IMR agent can include a montanic ester of triglycerol such as Licolub WE4 available from Clariant.

The IMR agent can be present in the curable resin composition in an amount effective to reduce the adhesion of the cured composition to the mold or other surface. A suitable amount of IMR agent present in the curable composition may be, for example, at least 0.5 parts by weight per 100 parts by weight of the epoxy resin(s) (PHR) in one embodiment, at least 1 PHR in another embodiment, from at least 1.5 PHR up to 10 PHR in still another embodiment, up to 7 PHR in yet another embodiment, up to 5 PHR in even still another embodiment, or up to 4 PHR in even yet another embodiment.

The composite formulation of the present invention also includes at least one reaction inhibitor compound as component (e). For example, the reaction inhibitor, component (e), may include a hydrocarbon having greater than C18 carbon atoms and an acid functionality. The acid functionality can be, for example, carboxylic acid or its derivatives, sulfonic acid or its derivatives, maleic anhydride or its derivatives, and mixtures thereof. The reaction inhibitor can include, for example, a hydrocarbon (greater than C18) with an acid functionality, for example, a montan fatty acid, erucic acid, Unicid^{™} acids available from Baker Hughes; CERAMER^{™} available from Baker Hughes; and sulfonates for example, E-Sperse 100 available from Ethox Chemicals LLC.

The amount of the reaction inhibitor present in the epoxy composite composition can be at least 0.5 parts by weight per 100 parts by weight of the epoxy resin(s) (PHR) in one embodiment, at least 1 PHR in another embodiment, from at least 1.5 PHR up to 10 PHR in still another embodiment, up to 7 PHR in yet another embodiment, up to 5 PHR in even still another embodiment, or up to 3 PHR in even yet another embodiment.

The curable epoxy resin composition may contain various other optional ingredients, compounds or additives as component (f). The optional additives that may be added to the curable resin formulation of the present invention may include, for example, one or more diluents, tougheners, rubbers, plasticizers, extenders, colorants, fire-retarding agents, smoke suppressants, thixotropic agents, adhesion promoters, biocides, antioxidants, other co-catalysts, other accelerators, surfactants, flow modifiers, stabilizers, and mixtures thereof. The curable resin composition may also contain finely divided solids such as calcium carbonate, fumed silica and/or carbon nanotubes that fill interstitial spaces between fibers at or near the surface of the molding compound and cured composite to provide a smoother surface. A typical epoxy resin composition may also contain some fillers, or other functional chemicals for any intended applications.

In one broad embodiment, the process for producing an epoxy composition useful for making a composite, includes admixing: (a) the at least one epoxy resin compound, (b) the at least one curing agent, (c) the at least one accelerator; (d) the at least one internal mold release agent, and (e) the at least one reaction inhibitor.

In one embodiment, and as one non-limiting illustration of the present invention, the epoxy resin composite composition may comprise, based on the weight of the total components in the composition, from 80 wt % to 90 wt % of an epoxy resin; from 6 wt % to 8 wt % of curing agent; from 2 wt % to 5 wt % of an accelerator; from 2 wt % to 5 wt % of an IMR agent; and from 2 wt % to 5 wt % of a reaction inhibitor. Once the epoxy resin composition is formed, the composition can be combined with a structural material such as carbon fibers to manufacture the composite article.

The above components of the epoxy composite composition can be mixed together in conventional mixing equipment and under conventional mixing conditions as known in the art. One or more additional optional compounds may be added to the resin formulation as desired.

Generally, the mixing of the above components (a)-(e) that make up the curable resin composition can be carried out at a temperature of from 60 °C to 90 °C in one embodiment, from 65 °C to 85 °C in another embodiment, and from 70 °C to 80 °C in still another embodiment. Once the components (a)-(e) are thoroughly mixed forming the curable resin composition, the curable composition is ready for curing; and prior to curing the composition, a fiber or other structural material can be added to the curable resin composition to form the epoxy-based resin composite composition that can be cured to form a composite article as described herein below.

The curable epoxy resin composite composition of the present invention has several beneficial properties and performances particularly when the proper ingredients are mixed with each other to form the dicy-curable epoxy resin composition. For example, some of the benefits of using the curable epoxy resin composition of the present invention includes: (1) the compounds making up the components of the curable composition, such as the IMR agent and the reaction inhibitor, can be readily incorporated into the epoxy resin formulation; and therefore, using extra application steps are not required during the molding process; (2) the compounds making up the components of the curable composition, such as the IMR agent and the reaction inhibitor, can aid in releasing a molded composite from a mold tool during molding at high temperatures (e.g., greater than (>) 145 °C); (3) the compounds making up the components of the curable composition, such as the IMR agent and reaction inhibitor, can aid in releasing a molded composite in cure cycle times of less than 5 min; (4) the compounds making up the components of the curable composition, such as the IMR agent and reaction inhibitor, can aid in releasing dicy-cured epoxy resins from a mold which is cured in less than 5 min; and (5) the compounds making up the components of the curable composition, such as the IMR agent and reaction inhibitor, do not lower the Tg of a cured composite part by more than 10 percent (%). In addition, an epoxy composite article of the present invention can be achieved by formulating and curing the epoxy composite formulation of the present invention with a dicy curing agent at isothermal molding at temperatures of greater than 140 °C.

The epoxy composite formulation of the present invention exhibits a proper and beneficial induction time, tᵢ. The induction time, tᵢ, of the composition can be measured using differential scanning calorimetry and using an isothermal method at the molding temperature of the composition. A composite part after molding will successfully release from the mold tool when molded at 150 °C, and when tᵢ (measured at 150 °C) is greater than 15 s. The induction time of the present invention composition can be controlled by the amount of IMR agent and reaction inhibitor added to the composition. The ingredients in the composition should provide an induction time sufficiently long enough to allow the IMR agent to: (1) rise to the surface of the epoxy resin formulation; (2) come to rest between the interface of the surface of the formulation and the surface of the metal surface of the mold; and (3) let the IMR agent successfully function (for its intended use as an internal mold release agent) to release the final cured product from the mold (without any portion of the cured product sticking to the mold) after the composition undergoes a curing time of less than 5 minutes.

A molded part made from the present invention formulation having an induction time, tᵢ, of greater than 15 s provides a successful release of a part from a mold when the composition is molded at isothermal molding temperatures of from 145 °C to 160 °C with a cure time of less than (<) 5 minutes (min); and particularly, when the formulation is cured with a dicy curing agent. Reducing the molding temperature below 145 °C is not desirable, because at a molding temperature of less than 145 °C, the cure time increases and the glass transition temperature of a cured part decreases.

One of the objectives of the present invention is to provide a curable composition exhibiting an induction time of greater than 15 s to allow an IMR agent to rise to the surface of the composition such that when the composition is cured to form a cured part or article in a mold, the cured part releases from the mold successfully. Using the curable formulation of the present invention, it has been found that an induction time of greater than 15 s can be achieved for the formulation by, for example, any one or more of the following ways: (1) using the proper ingredients in the formulation; (2) using the proper residence time of blending the ingredients at a blending temperature of, for example, > 60 °C; and/or (3) using the proper curing (molding) process steps and conditions.

### (1) The Formulation

The ingredients of the formulation of the present invention, i.e., the dicy-cured epoxy composite composition, can be modified to ensure that at least one IMR agent and at least one reaction inhibitor is present in the composition such that when the composition is cured, the resulting cured part can successfully release from a mold tool without significantly sticking to the surfaces of the mold tool to the detriment of the integrity of the cured part. Embodiments of an IMR agent and a reaction inhibitor are described herein above.

The induction time of the formulation with the proper IMR agent and reaction inhibitor can be controlled, for example, by controlling the concentration of the IMR agent and/or the reaction inhibitor present in the formulation. It has been found that as the concentration of the IMR agent is increased, the induction time also increases. However, it has also been found that the Tg of the final cured compound decreases with an increase in the IMR agent concentration. With the present invention, a balance of controlling concentration of the formulation ingredients and maximizing Tg has been advantageously determined.

### (2) The Blending Process

The resin formulation blending residence time in a batch process or continuous process can be modified such that the induction time of the resin formulation can be maximized. In general, it has been found that the induction time of the resin formulation can decrease with the increase in exposure time (residence blending time) of the resin formulation at temperatures above 60 °C. Also, the induction time of a particular composition can depend on the ingredients of a formulation prepared and thus the exposure time and temperature of such composition can be modified to provide a composition with optimum properties.

As one illustration of the present invention, and not to be limited thereby, in one embodiment, for example in a batch process, when the exposure time is greater than 6 hours at 80 °C, the induction time reduces to 0 resulting in a molded part sticking to the surfaces of the mold tool. In another embodiment, for example in a continuous process, by blending the epoxy resin formulation with the proper curing agent, accelerator, IMR agent, and reaction inhibitor as described above (and with other optional additives, if any), such blend can provide a resin formulation that can retain an induction time of > 15 s.

It has also been found that the induction time of the resin formulation decreases with the increase in resin formulation handling process conditions. For example, during the composite preparation process, such as when using prepreg infusion, direct long fiber technology, and/or sheet molding compounding, to achieve sufficient resin infusion in a structural material such as fiber tows, longer infusion times at elevated temperatures are recommended. However, it has been found that a longer infusion time at elevated temperatures can lower the induction time of the final composite.

### (3) The Cure/Molding Process

It has also been found that the induction time of a resin formulation decreases with the increase in the processing temperatures and processing times during the curing and molding process of the formulation to form a composite. For example, with regard to molding temperatures, an increase in the concentration of the IMR agent enables molding the resin formulation at higher temperatures (e.g., at > 145 °C).

As aforementioned, a composite article or molded part of the present invention can be produced by first preparing a formulation to be cured by admixing: (A) the epoxy composite composition described above; and (B) at least one structural material additive; and then curing the above mixture of components (A) and (B). In one preferred embodiment, the composite article is the reaction product of: (A) the epoxy composite composition described above; and (B) at least one fiber material as the structural material additive.

The curable epoxy resin composition or formulation has been described above. The amount of the curable resin composition, component (A) used to combine with a structural material (e.g. carbon fibers), component (B), to prepare a formulation for curing into a composite can be used in a ratio of resin composition to structural material (i.e., component (A): component (B)) of generally between a minimum of 80:20 and a maximum of 20:80 in one embodiment, and between 50:50 and 60:40 in another embodiment. In one preferred embodiment, the ratio of component (A):(B) can be 40:60.

The structural material additive, component (B), used in the curable resin composition can be for example non-metal substrates, particles, fibers, fillers and other structural additives, and mixtures thereof.

In one preferred embodiment, the structural material, component (B), can be fibers or fibrous materials. The fibers can be made of materials that are chemically and thermally stable at the temperature of the molding and curing step to form the final composite. The fibers useful in the present invention can include, for example, carbon fibers; graphite fibers; glass fibers, ceramic fibers; mineral fibers such as mineral wool; metal fibers; polymeric fibers; and the like; and mixtures thereof. In one preferred embodiment, the fibers can include carbon fibers, glass fibers, and mixtures thereof. In another preferred embodiment, the carbon fibers can be used, for example, for making vehicular and/or aerospace composites. In still another preferred embodiment, the fiber structural material, component (B), useful in the composition can be glass spheres.

The fibers may have diameters, for example, of from 250 nanometers (nm) to 500 µm in one general embodiment, from 500 nm to 50 µm in another embodiment, and from 1 µm to 10 µm in still another embodiment.

The fibers may be continuous fibers. Continuous fibers may be, for example, unidirectional, woven, knitted, braided or mechanically entangled. Alternatively, the fibers may be chopped; short fibers having lengths, for example, of up to 100 millimeters (mm) in one embodiment and from 3 mm to 50 mm in another embodiment. Chopped fibers can be held together with a binder to form fiber matts. In a specific embodiment, the fibers can be randomly oriented chopped fibers having lengths of from 12 mm to 25 mm.

Generally, the fiber content of the composite composition may be, for example, from 5 wt % to 80 wt % of the total weight of the composition in one embodiment, from 20 wt % to 80 wt % in another embodiment, and from 35 wt % to 70 wt % in still another embodiment. In one preferred embodiment, the fiber content of the composite composition may be, for example, 60 wt %.

Optional compounds, additives or materials may be added to the curable resin formulation of the present invention to prepare the formulation for curing into a composite article. The optional compounds that may be used to form the composite article may include, for example, one or more impact modifiers, reactive diluents, coalescents, pigments, dyes, particulate fillers, extenders, tackifiers, antioxidants and wetting agents as can be routinely selected by one of ordinary skilled in the art.

The amount of the optional compounds, additives or materials present in the curable resin composition, when used to form a composite, can be generally in the range of from 0 wt % to 10 wt % in one embodiment; and from 1 wt % to 5 wt % in another embodiment.

To prepare a composite article, the curable resin composition described above is prepared and then additives can be added to the resin composition before the resin composition is cured. For example, in one embodiment fibers, such as carbon fiber, glass fiber or mixtures thereof can be added to the resin composition and then the mixture can be cured to form a shaped composite article comprising a cured molded resin containing the fibers.

In one embodiment, the process for producing a composite article includes the steps of: (I) admixing: (a) at least one epoxy resin compound, (b) a dicy curing agent, (c) at least one accelerator, (d) at least one internal mold release agent; (e) at least one reaction inhibitor; and (f) any other desired optional additive(s) to form an epoxy composite formulation; (II) admixing a structural additive such as fibers into the epoxy composite formulation of step (I) to form an epoxy/fibers composite composition; and (III), curing the epoxy/fibers composite formulation of step (II) at an isothermal molding temperature (e.g., a temperature of greater than 145 °C).

Once the components (a)-(e) are thoroughly mixed forming the curable resin composition, the curable composition can be cured at isothermal molding temperatures of greater than 140 °C in one embodiment, greater than 145 °C in another embodiment, greater than 150 °C in still another embodiment, and greater than 160 °C in yet another embodiment. Other embodiments of the curing temperatures can be, for example, from 140 °C to 170 °C and from 145 °C to 160 °C.

The cure time of the dicy-curable epoxy resin composition can be from 120 seconds (s) to 5 minutes (min) in one embodiment, from 120 s to 4 min in another embodiment, and from 120 s to 2 min in still another embodiment.

The composite article of the present invention has several beneficial thermal and/or mechanical performances and properties. For example, the composite can have a high glass transition temperature (Tg) of more than 140 °C in one embodiment, from 140 °C to 170 °C in another embodiment, and from 150 °C to 170 °C in still another embodiment. The Tg of the composite can be measured by the method described in ASTM D5418-15. Exemplary of some of some other advantageous properties exhibited by the composite article can include exhibiting a Tg of > 150 °C and being able to mold release at a cure time of less than 3 min at a mold temperature of > 145 °C.

In a preferred embodiment, the glass transition temperature of a cured part does not decrease by more than 10 percent (%) when using the formulation of the present invention with the IMR agent and reaction inhibitor disclosed herein, as illustrated by the following equation: ΔTg = Tg,_{w/o IMR} - Tg, _{w/ IMR}, where Tg,_{w/o IMR} is the glass transition temperature of the formulation without a IMR agent and reaction inhibitor present in the formulation; and Tg, _{w/ IMR} is the glass transition temperature of the formulation with a IMR agent and reaction inhibitor present in the formulation.

The composite article, product or molded part using the curable epoxy resin composite formulation of the present invention may be used in the following applications: a molded automotive composite for closeout panel structures such as hood, trunk, liftgate structural support members, and the like.

### EXAMPLES

The following examples are presented to further illustrate the present invention in detail but are not to be construed as limiting the scope of the claims. Unless otherwise stated all parts and percentages are by weight.

Various raw materials (ingredients or components) used in the Inventive Examples (Inv. Ex.) and the Comparative Examples (Comp. Ex.) which follow are described herein below in Table I.

**Table I - Raw Materials**

| Component | Description | Supplier |
|---|---|---|
| Resin Blend | | |
| D.E.R.^{™} 6508 | An oxazolidone-based solid epoxy resin | Olin |
| D.E.N.^{™} 438 | An epoxy novolac resin that is a semi-solid reaction product of epichlorohydrin and phenol-formaldehyde novolac. | Olin |
| D.E.R.^{™} 331 | A liquid epoxy resin that is a reaction product of epichlorohydrin and bisphenol-A. | Olin |

| Curing Agent | | |
|---|---|---|
| Technicure Nanodicy | Dicyandiamide. | AC Catalyst |

| Accelerator | | |
|---|---|---|
| Omicure^{™} U-410M | an aromatic substituted urea. | Emerald Performance Materials Company |
| IMR | | |
| Licolub^{™} WE4 | an ester of montanic acids with a polyol in powder form. | Clariant |

| Reaction Inhibitor | | |
|---|---|---|
| Unicid^{™} 350 | a long chain, linear primary carboxylic acid having a melting point of 92 and a viscosity of 4. | Baker Hughes |
| E-Sperse 100 | a dispersant. | Ethox Chemicals LLC |
| Erucic Acid | a monounsaturated omega-9 fatty acid. | Axel |
| Behenic Acid | a carboxylic acid, the saturated fatty acid. | Axel |
| Licowax-S^{™} | an acid wax). | Clariant |
| Hysteric Acid | a saturated fatty acid with an 18-carbon chain; the IUPAC name is octadecanoic acid which is a waxy solid. | Axel |
| Unicid^{™} 550 | a long chain, linear primary carboxylic acid having a melting point of 101 and a viscosity of 8 | Baker Hughes |
| Ceramer^{™} 5494 | a polymer formed by grafting maleic anhydride derivatives onto hydrocarbon polymers | Baker Hughes |
| Licowax PED-121 | an oxidized high-density polyethylene wax | Clariant |
| Licowax-E^{™} | an ester of montanic acids with multifunctional alcohols. | Clariant |

### TEST METHODS

### Glass Transition Temperature (Tg) Determination

"DSC" stands for dynamic differential scanning calorimetry.
"DSC Glass Transition Temperature (Tg)" means the glass transition temperature of a given material as determined using DSC.
The Tg value of the final molded parts was determined by the method described in DMA - ASTM D5418-15 (2015).

### Induction Time Determination

A TA Instruments Q2000 Differential Scanning Calorimeter (DSC) can be used to determine induction time. From 5 mg to 12 mg of a formulated resin sample was placed in the bottom of a pre-weighed hermetically sealable DSC pan. The DSC pan was then sealed and crimped. Samples were run using the following method:
Step (1): ramp 100 °C/min to 150 °C;
Step (2): equilibrate at 150 °C;
Step (3): isothermal for 15 min; and
Step (4): stop the run.

The data obtained from running the samples through the above method can be plotted as a function of time using TA Universal Analysis software; and the inflexion points of the samples measured and plotted on a graph can be used to determine the induction time by calculating the time between the two inflexion points.

### Cure Time and Mold Temperature Determination

ATA Instruments Q2000 Differential Scanning Calorimeter (DSC) can also be used to determine cure time and mold temperature. From 5 mg to 12 mg of a formulated resin sample was placed in the bottom of a pre-weighed hermetically sealable DSC pan. The DSC pan was then sealed and crimped. Samples were run under the following method:
Step (1): ramp 100 °C/min to a projected mold temperature °C;
Step (2): equilibrate at projected mold temperature °C;
Step (3): isothermal for 15 min; and
Step (4): stop the run.

The data obtained from running the samples through the above method can be plotted as a function of time using the TA Universal Analysis software. Mold temperature can be determined by peak exotherm occurring in less than 3 minutes.

### Mold Release of Composite Article Determination

A proper part release from a forming mold is determined when the part releases from the mold tool at the end of a designated cure time without damage to the part geometry.

### Examples 1-8 and Comparative Examples A-H (Examples 3 and 5 are in accordance with the invention; Examples 1, 2, 4, 6-8, and the Comparative Examples are not in accordance with the invention)

### General Procedure for Sample Preparation

Samples of epoxy resin formulations were prepared by first heating 100 grams of resin(s) to 90 °C in a 20 max mixer cup (from FlackTek Inc.). The amounts of IMR agent, Technicure Nanodicy, and accelerator described in Tables II and III were added to the resin while the resin was hot; and the resulting hot mixture was immediately placed in a SpeedMixer^{™} Laboratory Mixer System (from FlackTek Inc.). The mixtures of components were mixed at 3,000 revolutions per minute (RPM) for 1 min. The resulting sample mixtures were then tested by DSC and the other property measurements described above.

### Part Molding

The samples of epoxy resin formulations prepared as described above were molded and cured according to the following general procedure:
Epoxy formulations were determined by adding the designated resin blends, with a curing agent, accelerator, reaction inhibitor, and internal mold release into a mixing vessel. After adequate mixing, the material was filmed into a resin sheet by heating the resin to approximately 85°C and drawing the resin through a blade with a designated gap height to create a film of desired thickness. The film was then cooled and rolled. A top layer of film and a bottom layer of film were layed out on a prepreg line where unidirectional carbon fiber of 24K tow was pulled in between the fop and bottom film layer to create a film-fiber-film structure. The structure was subjected to heat of up to 120°C for 5-45 seconds while pressure was applied by pulling the structure through heated rollers. The causes the resin film to impregnate the fiber bed, creating a carbon fiber / epoxy prepreg. The prepreg is cooled to room temperature and rolled. Molding charges are then cut from the prepreg to a predetermined volume which is expected to fill the geometry created in a mold cavity. The molding charges are placed into the hot molding tool at temperatures ranging from 145°C to 160°C. The hot molding tool is closed under force from a compression molding machine which can apply pressures ranging from 100PSI to 5000 PSI. The heat and pressure convert the prepreg charges into a part geometry. In a time span between 2 minutes and 5 minutes, the molding tool will open and a fully cured part geometry can be removed from the mold via mechanical ejection of the part.

The release characteristics a cured part presented in the Examples were completed by molding a conventional "hat" section part in a stainless-steel tool with chrome surface plating. The general design dimensions of the hat part were 9 inches by 12 inches with an indention 6.25 inches wide having a 2.75 inches sidewall depth.

**Table II - Formulations and Evaluation in a Continuous Process**

| Example No. | Comp. Ex. A | Comp. Ex. B | Ex. 1 | Ex. 2 | Comp. Ex. C | Inv. Ex. 3 | Ex. 4 | (Comp. Ex. D |
|---|---|---|---|---|---|---|---|---|
| Resin Blend (wt%) | | | | | | | | |
| D.E.R.^{™} 6508 | 38.25 | 38.25 | 38.25 | 38.25 | 38.25 | 38.25 | 38.25 | 38.25 |
| D.E.N.^{™} 438 | 40.20 | 40.20 | 40.20 | 40.20 | 40.20 | 40.20 | 40.20 | 40.20 |
| D.E.R.^{™} 331 | 21.55 | 21.55 | 21.55 | 21.55 | 21.55 | 21.55 | 21.55 | 21.55 |
| | | | | | | | | |

| Curing Agent (PHR) | | | | | | | | |
|---|---|---|---|---|---|---|---|---|
| Dicyandiamide | 9.17 | 9.17 | 9.17 | 9.17 | 9.17 | 9.17 | 9.17 | 9.17 |
| | | | | | | | | |

| Accelerator (PHR) | | | | | | | | |
|---|---|---|---|---|---|---|---|---|
| Omicure^{™} U-410M | 4 | 4 | 4 | 4 | 4 | 4 | 4 | 4 |
| | | | | | | | | |

| Reaction Inhibitor (PHR) | | | | | | | | |
|---|---|---|---|---|---|---|---|---|
| Unicid^{™} 350 | | | | | | 3 | | |
| | | | | | | | | |

| IMR (PHR) | | | | | | | | |
|---|---|---|---|---|---|---|---|---|
| Licolub^{™} WE4 | | 4 | 4 | 4 | 4 | 4 | 3 | 2.5 |
| | | | | | | | | |
| Resin Blending Process | Batch | Batch | Contin. | Contin. | Contin. | Contin. | Contin. | Contin. |
| Mold Temperature (C°) | 150 | 150 | 150 | 155 | 160 | 150 | 150 | 150 |
| | | | | | | | | |

| Results | | | | | | | | |
|---|---|---|---|---|---|---|---|---|
| Cure Time (min) | 3 | 3 | 3 | 3 | 3 | 3 | 3 | 3 |
| Induction Time (s) | 0 | 9 | 33-37 | 21 | 9.8 | 36-40 | 30-35 | 10-20 |
| Release Long Fiber? | No | No | Yes | Yes | No | Yes | No | No |
| Release Short Fiber? | No | No | Yes | Yes | No | Yes | Yes | No |
| Tg (°C) of Molded Part | 166-170 | 165-170 | 165-170 | 165-170 | 165-170 | 156 | 166-170 | 166-170 |
| ΔTg (Tg,_{w/o IMR} - Tg, _{w/ IMR}) | 0 | 0 | 0 | 0 | 0 | -7.1 | 0 | 0 |

From the data in Table II, it can be concluded that for a continuous process, a formulation containing 4 parts of Licolub WE4 and from 0 to 3 parts of Unicid 350 (Ex. 3) works well when the mold temperature is from 150 °C to 155 °C. A formulation containing 3 parts of Licolub WE4 (Ex. 4) can work well using a continuous process. Also, as shown in Table II, between the temperatures of 150 °C and 160 °C, the induction time for a formulation decreases as mold temperature increases.

**Table III**

| Example No. | Comp. Ex. A | Comp. Ex. B | Inv. Ex.5 | Ex. 6 | Comp. Ex. E | Ex. 7 | Ex. 8 | Comp. Ex. F | Comp. Ex. G | Comp. Ex. H |
|---|---|---|---|---|---|---|---|---|---|---|
| Resin Blend (wt%) | | | | | | | | | | |
| D.E.R.^{™} 6508 | 38.25 | 38.25 | 38.25 | 38.25 | 38.25 | 38.25 | 38.25 | 38.25 | 38.25 | 38.25 |
| D.E.N.^{™} 438 | 40.20 | 40.20 | 40.20 | 40.20 | 40.20 | 40.20 | 40.20 | 40.20 | 40.20 | 40.20 |
| D.E.R.^{™} 331 | 21.55 | 21.55 | 21.55 | 21.55 | 21.55 | 21.55 | 21.55 | 21.55 | 21.55 | 21.55 |
| | | | | | | | | | | |

| Curing Agent (PHR) | | | | | | | | | | |
|---|---|---|---|---|---|---|---|---|---|---|
| Dicyandiamide | 9.17 | 9.17 | 9.17 | 9.17 | 9.17 | 9.17 | 9.17 | 9.17 | 9.17 | 9.17 |
| | | | | | | | | | | |

| Accelerator (PHR) | | | | | | | | | | |
|---|---|---|---|---|---|---|---|---|---|---|
| Omicure* U-410M* | 4 | 4 | 4 | 4 | 4 | 4 | 4 | 4 | 4 | 4 |
| | | | | | | | | | | |

| Reaction Inhibitor (PHR) | | | | | | | | | | |
|---|---|---|---|---|---|---|---|---|---|---|
| Unicid^{™} 350 | | | 3 | 2 | 4 | 4 | 4 | 4 | 4 | 4 |
| E-Sperse 100 | | | | | | | | 2.5 | | |
| Eurcic Acid | | | | | | | | | 4 | |
| | | | | | | | | | | |

| IMR (PHR) | | | | | | | | | | |
|---|---|---|---|---|---|---|---|---|---|---|
| Licolub^{™} WE4 | | 4 | 4 | | | | | | | |
| | | | | | | | | | | |
| Resin Blending Process | Batch | Batch | Batch | Batch | Batch | Batch | Batch | Batch | Batch | Batch |
| Mold Temperature (C°) | 150 | 150 | 150 | 150 | 150 | 155 | 160 | 150 | 150 | 150 |
| | | | | | | | | | | |

| Results | | | | | | | | | | |
|---|---|---|---|---|---|---|---|---|---|---|
| Cure Time (min) | 3 | 3 | 3 | 3 | 3 | 3 | 3 | 3 | 3 | 3 |
| Induction Time (s) | 0 | 9 | 34-38 | 34-38 | 60 | 31.8 | 20.4 | 66 | 66 | 62 |
| Release Long Fiber? | No | No | Yes | Yes | Yes | Yes | Yes | Yes | Yes | Yes |
| Release Short Fiber? | No | No | Yes | Yes | Yes | Yes | Yes | Yes | Yes | Yes |
| Tg (°C) of Molded Part | 166-170 | 165-170 | 156 | 155 | 145 | 145 | 145 | 138 | 131 | 141 |
| ΔTg (Tg,_{w/o IMR} - Tg, _{w/ IMR}) | 0 | 0 | -7.1 | -7.7 | -13.7 | -13.7 | -13.7 | -17.9 | -22.0 | -16.1 |

From the data in Table III, it can be concluded that for the batch process, 4 parts of Licolub WE4 and 3 parts of Unicid 350 (Ex. 5); or 2 parts of Unicid 350 by itself (Ex. 6), work well when the mold temperature is 150 °C.

As aforementioned, controlling induction time to > 15 s in isothermal curing can allow a dicy-cured epoxy to release from molding tools without the cured product attaching to the mold surfaces. For example, in a batch resin formulation blending/mixing process, the batch process can have an extended mixing time at certain temperatures when an IMR agent is present in the resin formulation (see Comp. Ex. A versus Comp. Ex. B). A formulation with no IMR agent additive is described in Comp. Ex. A. In a continuous resin formulation blending/mixing process, the continuous process can have a minimized residence mixing time at temperatures > 60 °C (see Ex.1 and Ex. 2) when the proper IMR agent is present in the resin formulation. A formulation with a blend/combination of the IMR agent and the reaction inhibitor can provide the required induction time during the curing process whether the process is a batch process or a continuous resin blending process (see Ex. 1-8 and Comp. Ex. A-H).

In the Examples, samples were run through the batch and continuous methods and then tested for the properties indicated in Tables II and III. The induction time data, which is an analysis of heat flow (W/g) as a function of time (min), resulting from the various Examples were obtained using TA Universal Analysis software and isothermal DSC scans as is known in the art.

## Claims

1. A curable epoxy resin composition comprising: (a) at least one epoxy resin compound, (b) at least one curing agent, (c) at least one curing accelerator, (d) at least one internal mold release agent; and (e) at least one reaction inhibitor.

2. The composition of claim 1, wherein the epoxy composite composition releases from a forming mold at mold curing temperatures and after the epoxy composition undergoes curing to at least greater than 85 percent cure at a cure period of from three minutes or less; and wherein the resulting cured composite has a Tg of greater than 150 °C, whereby the Tg is determined by the method disclosed in the specification.

3. The composition of claim 2, wherein the epoxy resin composition releases from a forming mold at an induction time of from 15 seconds to 60 seconds, whereby the induction time is determined by the method disclosed in the specification.

4. The composition of claim 1, wherein the at least one epoxy resin compound is selected from the group consisting of at least one diglycidyl ether of a polyhydric phenol, at least one polyglycidyl ether of a phenol-formaldehyde novolac resin, at least one oxazolidone group-containing polyglycidyl ether of a phenolic compound, and mixtures thereof.

5. The composition of claim 1, wherein (i) the at least one epoxy resin compound is diglycidyl ether of bisphenol-A; (ii) the at least one curing agent is dicyandiamide; (iii) the at least one curing accelerator is a urea compound selected from one or more of toluene bis-dimethylurea p-chlorophenyl-N,N-dimethylurea; 3-phenyl-1,1-dimethylurea; 3,4-dichlorophenyl-N,N-dimethylurea; N-(3-chloro-4-methylphenyl)-N',N'-dimethylurea; and mixtures thereof; (iv) the at least one internal mold release agent is an ester of montanic acid with a polyol; and (v) the at least one reaction inhibitor is a hydrocarbon having greater than C18 carbon atoms and an acid functionality.

6. The composition of claim 5, wherein the acid functionality includes carboxylic acid or derivatives of carboxylic acid; sulfonic acid or derivatives of sulfonic acid; maleic anhydride or derivatives of maleic anhydride; and mixtures thereof.

7. The composition of claim 1, further comprising one or more of diluents, tougheners, rubbers, plasticizers, extenders, colorants, fire-retarding agents, smoke suppressants, thixotropic agents, adhesion promoters, biocides, antioxidants, and fillers.

8. The composition of claim 7, wherein the fillers include finely divided solids for filling interstitial spaces between fibers at or near the surface of the curable epoxy resin composite composition and the cured composite to provide a smoother surface for the cured composite.

9. The composition of claim 8, wherein the finely divided solid fillers include calcium carbonate, fumed silica, carbon nanotubes, and mixtures thereof.

10. A process for producing a curable epoxy resin composition comprising admixing: (a) at least one epoxy resin compound, (b) at least one curing agent, (c) at least one curing accelerator, (d) at least one internal mold release agent; and (e) at least one reaction inhibitor.

11. A curable epoxy-based resin composite composition comprising (A) the curable epoxy composition of claim 1; and (B) at least one structural material.

12. The composite composition of claim 11, wherein the structural material is a fiber material selected from the group consisting of carbon fibers, glass fibers, and mixtures thereof.

13. A process for producing a curable epoxy-based resin composite composition comprising admixing: (A) the epoxy composition of claim 1; and (B) at least one structural material.

14. A composite article comprising the reaction product of: (i) the epoxy composition of claim 1; and (ii) at least one structural material.

15. A process for producing a composite article comprising the steps of:
(I) admixing: (a) at least one epoxy resin compound, (b) at least one curing agent, (c) at least one curing accelerator, (d) at least one internal mold release agent; and (e) at least one reaction inhibitor to form an epoxy composite formulation;
(II) adding at least one structural material to the epoxy composite formulation of step (I) to form a combination epoxy and structural material composite composition; and
(III) curing the combination epoxy and structural material composite composition of step (II) at isothermal molding at a temperature of greater than 145 °C.

## Patentansprüche

1. Härtbare Epoxidharzzusammensetzung, umfassend: (a) mindestens eine Epoxidharzverbindung, (b) mindestens ein Härtungsmittel, (c) mindestens einen Härtungsbeschleuniger, (d) mindestens ein internes Formtrennmittel; und (e) mindestens einen Reaktionsinhibitor.

2. Zusammensetzung nach Anspruch 1, wobei sich die Epoxidverbundwerkstoffzusammensetzung bei Formhärtungstemperaturen von einer Ausbildungsform trennt und nachdem die Epoxidzusammensetzung bei einer Härtungsdauer von drei Minuten oder weniger eine Härtung zu mindestens mehr als 85 Prozent durchläuft; und wobei der resultierende gehärtete Verbundwerkstoff eine Tg von über 150 °C aufweist, wodurch die Tg durch Verfahren bestimmt wird, das in der Beschreibung offenbart wird.

3. Zusammensetzung nach Anspruch 2, wobei sich die Epoxidharzzusammensetzung bei einer Induktionszeit von 15 Sekunden bis 60 Sekunden von einer Form trennt, wodurch die Induktionszeit durch das Verfahren bestimmt wird, das in der Beschreibung offenbart wird.

4. Zusammensetzung nach Anspruch 1, wobei die mindestens eine Epoxidharzverbindung aus der Gruppe ausgewählt ist, bestehend aus mindestens einem Diglycidylether eines mehrwertigen Phenols, mindestens einem Polyglycidylether eines Phenol-Formaldehyd-Novolac-Harzes, mindestens einem Oxazolidongruppen enthaltenden Polyglycidylether einer Phenolverbindung und Mischungen davon.

5. Zusammensetzung nach Anspruch 1, wobei (i) die mindestens eine Epoxidharzverbindung Diglycidylether von Bisphenol-A ist; (ii) das mindestens eine Härtungsmittel Dicyandiamid ist; (iii) der mindestens eine Härtungsbeschleuniger eine Harnstoffverbindung ist, die aus einem oder mehreren von Toluol-Bisdimethylharnstoff, p-Chlorphenyl-N,N-dimethylharnstoff, 3-Phenyl-1,1-dimethylharnstoff, 3,4-Dichlorphenyl-N,N-dimethylharnstoff ausgewählt ist; N-(3-Chlor-4-methylphenyl)-N',N'-dimethylharnstoff; und Mischungen davon; (iv) das mindestens eine interne Formtrennmittel ein Ester einer Montansäure mit einem Polyol ist; und (v) der mindestens eine Reaktionsinhibitor ein Kohlenwasserstoff ist, der mehr als C18-Kohlenstoffatome und eine Säurefunktionalität aufweist.

6. Zusammensetzung nach Anspruch 5, wobei die Säurefunktionalität Carbonsäure oder Derivate von Carbonsäure; Sulfonsäure oder Derivate der Sulfonsäure; Maleinsäureanhydrid oder Derivate von Maleinsäureanhydrid einschließt; und Mischungen davon.

7. Zusammensetzung nach Anspruch 1, ferner umfassend ein oder mehrere von Verdünnungsmitteln, Schlagzähigkeitsverbesserern, Kautschuken, Weichmachern, Streckmitteln, Farbstoffen, Flammschutzmitteln, Rauchunterdrückern, Thixotropiermitteln, Haftvermittlern, Bioziden, Antioxidantien und Füllstoffen.

8. Zusammensetzung nach Anspruch 7, wobei die Füllstoffe fein verteilte Feststoffe zum Füllen von Zwischenräumen zwischen Fasern an oder nahe der Oberfläche der härtbaren Epoxidharzverbundwerkstoffzusammensetzung und des gehärteten Verbundwerkstoffs einschließen, um eine glattere Oberfläche für den gehärteten Verbundwerkstoff bereitzustellen.

9. Zusammensetzung nach Anspruch 8, wobei die fein verteilten festen Füllstoffe Calciumcarbonat, pyrogenes Siliciumdioxid, Kohlenstoffnanoröhren und Mischungen davon einschließen.

10. Prozess zum Produzieren einer härtbaren Epoxidharzzusammensetzung, umfassend ein Beimengen von:
(a) mindestens einer Epoxidharzverbindung, (b) mindestens einem Härtungsmittel, (c) mindestens einem Härtungsbeschleuniger, (d) mindestens einem internen Formtrennmittel; und (e) mindestens einen Reaktionsinhibitor.

11. Härtbare Harzverbundwerkstoffzusammensetzung auf Epoxidbasis, umfassend (A) die härtbare Epoxidzusammensetzung nach Anspruch 1; und (B) mindestens ein Strukturmaterial.

12. Verbundwerkstoffzusammensetzung nach Anspruch 11, wobei das Strukturmaterial ein Fasermaterial ist, das aus der Gruppe ausgewählt ist, bestehend aus Kohlenstofffasern, Glasfasern und Mischungen davon.

13. Verfahren zum Produzieren einer härtbaren Harzverbundwerkstoffzusammensetzung auf Epoxidbasis, umfassend das Beimengen von: (A) der Epoxiszusammensetzung nach Anspruch 1; und (B) mindestens einem Strukturmaterial.

14. Verbundwerkstofferzeugnis, umfassend das Reaktionsprodukt von: (i) der Epoxidzusammensetzung nach Anspruch 1; und (ii) mindestens einem Strukturmaterial.

15. Verfahren zum Produzieren eines Verbundwerkstofferzeugnisses, umfassend die Schritte:
(I) Beimengen von: (a) mindestens einer Epoxidharzverbindung, (b) mindestens einem Härtungsmittel, (c) mindestens einem Härtungsbeschleuniger, (d) mindestens einem internen Formtrennmittel; und (e) mindestens einem Reaktionsinhibitor, um eine Epoxidverbundwerkstoffformulierung auszubilden;
(II) Hinzufügen von mindestens einem Strukturmaterial zu der Epoxidverbundwerkstoffformulierung aus Schritt (I), um eine kombinierte Verbundwerkstoffzusammensetzung aus Epoxid und Strukturmaterial auszubilden; und
(III) Härten der Kombinations-Verbundwerkstoffzusammensetzung aus Epoxid und Strukturmaterial aus Schritt (II) bei isothermischem Formen bei einer Temperatur von über 145 °C.

## Revendications

1. Composition de résine époxy durcissable, comprenant : (a) au moins un composé de résine époxy, (b) au moins un agent de durcissement, (c) au moins un accélérateur de durcissement, (d) au moins un agent de démoulage interne ; et (e) au moins un inhibiteur de réaction.

2. Composition selon la revendication 1, dans laquelle la composition composite époxy se détache d'un moule de formage à des températures de durcissement du moule et après que la composition époxy ait subi un durcissement d'au moins plus de 85 pour cent à une période de durcissement de trois minutes ou moins ; et dans laquelle le composite durci qui en résulte a une Tg supérieure à 150 °C, la Tg étant déterminée par le procédé divulgué dans la spécification.

3. Composition selon la revendication 2, dans laquelle la composition de résine époxy se détache d'un moule de formage à un temps d'induction compris entre 15 secondes et 60 secondes, le temps d'induction étant déterminé par le procédé divulguée dans la spécification.

4. Composition selon la revendication 1, dans laquelle l'au moins un composé de résine époxy est choisi dans le groupe constitué d'au moins un éther diglycidylique d'un phénol polyhydrique, d'au moins un éther polyglycidylique d'une résine novolaque phénol-formaldéhyde, d'au moins un éther polyglycidylique d'un composé phénolique contenant un groupe oxazolidone, et des mélanges de ceux-ci.

5. Composition selon la revendication 1, dans laquelle (i) l'au moins un composé de résine époxy est un éther diglycidylique de bisphénol-A ; (ii) l'au moins un agent de durcissement est le dicyandiamide ; (iii) l'au moins un accélérateur de durcissement est un composé d'urée choisi parmi un ou plusieurs parmi le toluène bis-diméthylurée|p-chlorophényl-N,N-diméthylurée ; 3-phényl-1,1-diméthylurée ; 3,4-dichlorophényl-N,N-diméthylurée ; N-(3-chloro-4-méthylphényl)-N',N'-diméthylurée ; et des mélanges de ceux-ci. (iv) l'au moins un agent de démoulage interne est un ester d'acide montanique avec un polyol ; et (v) l'au moins un inhibiteur de réaction est un hydrocarbure ayant plus de 18 atomes de carbone et une fonctionnalité acide.

6. Composition selon la revendication 5, dans laquelle la fonctionnalité acide comprend l'acide carboxylique ou des dérivés de l'acide carboxylique ; l'acide sulfonique ou des dérivés de l'acide sulfonique ; l'anhydride maléique ou des dérivés de l'anhydride maléique ; et des mélanges de ceux-ci.

7. Composition selon la revendication 1, comprenant en outre un ou plusieurs diluants, durcisseurs, caoutchoucs, plastifiants, extenseurs, colorants, agents ignifuges, suppresseurs de fumée, agents thixotropes, promoteurs d'adhésion, biocides, antioxydants et charges.

8. Composition selon la revendication 7, dans laquelle les charges comprennent des solides finement divisés pour remplir les espaces interstitiels entre les fibres à la surface ou près de la surface de la composition composite de résine époxy durcissable et du composite durci pour fournir une surface plus lisse au composite durci.

9. Composition selon la revendication 8, dans laquelle les charges solides finement divisées comportent du carbonate de calcium, de la silice sublimée, des nanotubes de carbone et des mélanges de ceux-ci.

10. Procédé de production d'une composition de résine époxy durcissable comprenant le mélange :
(a) au moins un composé de résine époxy, (b) au moins un agent de durcissement, (c) au moins un accélérateur de durcissement, (d) au moins un agent de démoulage interne ; et (e) au moins un inhibiteur de réaction.

11. Composition composite de résine à base d'époxy durcissable comprenant (A) la composition époxy durcissable selon la revendication 1 ; et (B) au moins un matériau structurel.

12. Composition composite selon la revendication 11, dans laquelle le matériau structurel est un matériau fibreux choisi dans le groupe constitué par les fibres de carbone, les fibres de verre et des mélanges de ceux-ci.

13. Procédé de production d'une composition composite de résine à base d'époxy durcissable comprenant le mélange : (A) la composition de durcisseur selon la revendication 1 ; et (B) au moins un matériau structurel.

14. (A)un article composite comprenant le produit de réaction de : (i) la composition époxy selon la revendication 1 ; et (ii) au moins un matériau structurel.

15. Procédé de production d'un article composite comprenant les étapes consistant à :
(I) mélanger : (a) au moins un composé de résine époxy, (b) au moins un agent de durcissement, (c) au moins un accélérateur de durcissement, (d) au moins un agent de démoulage interne ; et (e) au moins un inhibiteur de réaction pour former une formulation composite époxy ;
(II) ajouter au moins un matériau structurel à la formulation composite époxy de l'étape (I) pour former une composition composite combinant époxy et matériau structurel ; et
(III) durcir la composition composite à base d'époxy et de matériaux structurels de l'étape (II) par moulage isotherme à une température supérieure à 145 °C.
